# EUROPÄISCHE PATENTSCHRIFT

(11) **EP 1 859 132 B1**
(45) Veröffentlichungstag und Bekanntmachung des Hinweises auf die Patenterteilung: **09.06.2010**
(21) Anmeldenummer: 06723339.5
(22) Anmeldetag: 10.03.2006
(51) Int. Cl.: F01N 13/18

(54) **GEHÄUSE FÜR EINE ABGASBEHANDLUNGSKOMPONENTE MIT VERSTÄRKUNGSHÜLSE**
HOUSING FOR A WASTE GAS TREATMENT COMPONENT COMPRISING A REINFORCED COVERING
BOITIER D'UN COMPOSANT DE TRAITEMENT DES GAZ D'ECHAPPEMENT DOTE D'UNE DOUILLE DE RENFORCEMENT

(30) Priorität: 16.03.2005 DE 102005012067
(43) Veröffentlichungstag der Anmeldung: 28.11.2007
(73) Patentinhaber: Emitec Gesellschaft für Emissionstechnologie mbH, 53797 Lohmar (DE)
(72) Erfinder: FAUST, Hans-Günter, 51143 Köln (DE); GUTOWSKI, Jörg, 99817 Eisennach (DE); KAISER, Friedrich-Wilhelm, 53819 Neunkirchen-Seelscheid (DE); MÜLLER, Hermann, Josef, 51515 Kürten-Spitze (DE); HAESEMANN, Gottfried, Wilhelm, 51515 Kürten (DE)
(74) Vertreter: Rössler, Matthias
(86) Internationale Anmeldenummer: PCT/EP2006/002221
(87) Internationale Veröffentlichungsnummer: WO 2006/097246

(56) Entgegenhaltungen:
- EP-A- 1 353 049
- EP-A- 1 643 095
- DE-A1- 3 728 435
- JP-A- 06 346 726
- US-A1- 2002 096 225

## Beschreibung

Die Erfindung betrifft einen Gehäuse für eine Abgasbehandlungskomponente, welches ein Mantelrohr mit einer ersten Dicke und einer ersten Länge sowie mindestens eine Hülse mit einer zweiten Dicke und einer zweiten Länge umfasst, wobei die mindestens eine Hülse zumindest teilweise außen an dem Mantelrohr anliegt und mit diesem verbunden ist. Derartige Gehäuse dienen insbesondere der Aufnahme von Abgasbehandlungskomponenten, die zur Umsetzung von in Abgasen mobiler Verbrennungskraftmaschinen enthaltenen Schadstoffen vorgesehen sind.

Bei der Ausgestaltung derartiger Gehäuse für Abgasbehandlungskomponenten sind eine Vielzahl unterschiedlicher Kriterien zu berücksichtigen. Das Gehäuse muss beispielsweise den thermischen und dynamischen Belastungen im Abgassystem von Automobilen standhalten. Außerdem sind verstärkt auch Kostenfaktoren zu berücksichtigen da solche Abgasbehandlungskomponenten häufig in Serienfertigung hergestellt werden. Die Gehäuse dienen der strukturellen Integrität der Abgasbehandlungskomponente und als Basis für eine Fixierung in übergeordnete Abgassysteme. Weiter beeinflussen sie maßgeblich den Wärmeübergang von den Abgasreinigungskomponenten hin zur Umgebung. Deshalb stellt das Gehäuse ein wesentliches Bauteil im Hinblick auf Abgasreinigungskomponenten dar, welches auch schon vielfach Gegenstand von technischen Weiterentwicklungen gewesen ist.

Aus der DE-A1-3728435 ist ein Katalysator für Fahrzeugabgase mit einem Gehäuse bekannt, das an seinen Enden Flansche umfasst, über die der Katalysator mit anderen Komponenten lösbar verbunden werden kann.

Die EP-A2-1353049 offenbart ein Katalysatorgehäuse, das innerhalb eines Abgasleitungsstücks angeordnet ist und einen kleineren Durchmesser als dieses aufweist und daher in dem Abgasleitungsstück über Distanzhülsen abgestützt wird.

Aus der JP-A-06346726 ist ein rohrförmiges Gehäuse für einen Metallträger bekannt, das aus einer dünnen Gehäusewand und Verstärkungshülsen in der Nähe der Endbereiche der Gehäusewand zur Steigerung der Festigkeit besteht.

Ein weiterer Aspekt, der zunehmend an Bedeutung gewinnt, ist das Gewicht solcher Abgasbehandlungskomponenten. Gerade für den Motorsportbereich oder aber auch für Abgasbehandlungskomponenten, die in Handgeräten eingesetzt werden, wird eine Gewichtsreduzierung gewünscht. Zu diesem Zweck sind beispielsweise Mantelrohre bekannt, die mit einer Vielzahl von Aussparungen ausgebildet sind, oder die extrem dünne Wandstärken aufweisen. Die damit hergehende Schwächung des Mantelrohres führt jedoch dazu, dass beim Fixieren der Abgasbehandlungskomponente in einem Abgassystem oder ggf. auch schon bei deren Herstellung eine Schwächung der Abgasbehandlungskomponente stattfindet, die einen dauerhafter Einsatz unter hohen thermischen und dynamischen Belastungen im Abgassystem gefährdet.

Hiervon ausgehend ist es Aufgabe der vorliegenden Erfindung, die mit Bezug auf den Stand der Technik geschilderten technischen Probleme zumindest teilweise zu lindern. Weiter ist insbesondere ein Gehäuse für eine Abgasbehandlungskomponente anzugeben, welches einerseits eine Gewichtsreduzierung realisiert, andererseits aber auch eine dauerhafte Fixierung der Abgasbehandlungskomponente in einem Abgassystem gewährleistet. Weiterhin ist das Gehäuse so zu gestalten, dass deren Herstellung beziehungsweise Integration in eine Serienfertigung einfach stattfinden kann.

Diese Aufgaben werden gelöst mit einem Gehäuse für eine Abgasbehandlungskomponente mit den Merkmalen des Patentanspruches 1. Weitere auch vorteilhafte Ausgestaltungen des Gehäuses sowie besonders bevorzugte Einsatzgebiete sind in den abhängig formulierten Patentansprüchen beschreiben. Es sei darauf hingewiesen, dass die in den Patentansprüchen einzeln aufgeführten Merkmale in beliebiger, technologisch sinnvoller, Weise miteinander kombiniert werden können, und weitere Ausgestaltungen des erfindungsgemäßen Gehäuses darstellen. Zur ergänzenden Spezifierung können auch Bestandteile der allgemeinen Beschreibung beziehungsweise der Figurenbeschreibung herangezogen werden.

Das Gehäuse für eine Abgasbehandlungskomponente umfasst ein Mantelrohr mit einer ersten Dicke und einer ersten Länge sowie mindestens eine Hülse mit einer zweiten Dicke und einer zweiten Länge. Die mindestens eine Hülse liegt zumindest teilweise außen an dem Mantelrohr an und ist mit diesem verbunden. Das Gehäuse zeichnet sich dadurch aus, dass die mindestens eine Hülse mit einer zweiten Länge ausgebildet ist, die kürzer als die erste Länge des Mantelrohres ist, wobei das Mantelrohr und die mindestens eine Hülse miteinander wenigstens teilweise hartgelötet sind und die mindestens eine Hülse zumindest einen Kontaktbereich und wenigstens ein Reservoir zur Aufnahme von Hartlot aufweist

Ein solches Gehäuse ist bevorzugt aus einem metallischen Material gefertigt und hat einen im Wesentlichen zylindrischen Aufbau. Grundsätzlich sind jedoch auch andere Gestaltungsformen möglich, so dass das Gehäuse auch einen ovalen, konischen oder sonstigen Querschnittsverlauf aufweisen kann. Das Gehäuse ist insbesondere geeignet, den thermischen und dynamischen Belastungen in einem Abgassystem standzuhalten, also beispielsweise auch Temperaturen bis ca. 1000°C.

Das hier beschriebene Gehäuse ist bevorzugt zweiteilig ausgeführt, und umfasst einen Mantelrohr und eine Hülse. Die Hülse umschließt zumindest teilweise das Mantelrohr außen, so dass zumindest ein Teil der Innenfläche der Hülse an der Außenfläche des Mantelrohres anliegt, insbesondere zumindest beide Begrenzungen der mindestens einen Hülse. Bevorzugt sind das Mantelrohr und die Hülse miteinander fügetechnisch verbunden, grundsätzlich ist jedoch auch möglich, dass die Hülse selbst Teil des Mantelrohres ist. Die Lage der Hülse zu dem Mantelrohr ist unter Berücksichtigung der Einbauart in eine Abgasanlage und/oder der auftretenden thermischen bzw. dynamischen Belastung frei wählbar, wobei vorteilhafter Weise zumindest der größte Teil der Hülse mit dem Mantelrohr in Kontakt ist. Bevorzugt ist die Hülse nicht überstehend angeordnet, sondern nahe einem Ende des Mantelrohres oder in etwa mittig.

Das Mantelrohr hat eine erste Dicke, die bevorzugt kleiner als 1,5 mm ist, insbesondere kleiner 1,0 mm und ganz besonders bevorzugt kleiner 0,5 mm. Unter Umständen ist es sogar möglich, das Mantelrohr mit einer ersten Dicke kleiner 0,3 mm auszuführen. Die erste Länge des Mantelrohres beträgt insbesondere mindestens 50 mm, bevorzugt mehr als 70 mm oder sogar mindestens 90 mm.

Die Hülse ist nun mit einer zweiten Länge ausgebildet, die kürzer als die erste Länge des Mantelrohres ist. Damit erstreckt sich die Hülse nur über einen Teil der Außenfläche des Mantelrohres. Insbesondere dient die Hülse als eine Art Verstärkung bzw. Versteifung des Mantelrohres in einem bestimmten Abschnitt, so dass eine verbesserte Steifigkeit der Abgasbehandlungskomponente bzw. des Gehäuses realisiert ist oder aber auch eine zusätzliche oder besonders geeignete Verbindungsstelle hin zu benachbarten Komponenten eines Abgassystems bereitgestellt wird. Dabei können besonders leichte Gehäuse bereitgestellt werden, wobei gleichzeitig die Anforderungen hinsichtlich einer Fixierung der Abgasbehandlungskomponente bzw. der strukturellen Integrität über die Betriebsdauer erfüllt werden können. Dabei kann gegebenenfalls auch mehr als eine Hülse vorgesehen werden, beispielsweise mit zwei oder drei Hülsen. Das bietet sich z.B. an, wenn die Abgasbehandlungskomponente an zwei axial voneinander beabstandeten Stellen mit einer Abgasleitung (fest oder nach Art eines Führung) verbunden wird.

Gemäß, einer Weiterbildung des Gehäuses liegt die zweite Länge der mindestens einen Hülse in einem Bereich von 10 mm bis 40 mm. Bevorzugt hat die mindestens eine Hülse eine zweite Länge von 15 bis 20 mm. Damit ist eine relativ schmale Hülse angegeben, die also nur in einem geringen Maß das Gewicht der Abgasbehandlungskomponente beeinflusst. Gleichzeitig ist die zweite Länge jedoch so gewählt, dass beispielsweise eine ausreichende Versteifung bzw. Materialverdickung für eine fügetechnische Verbindung hin zu benachbarten Komponenten bereitsteht.

Weiter wird auch vorgeschlagen, dass die erste Dicke des Mantelrohres kleiner ist als die zweite Dicke der mindestens einen Hülse. Bevorzugt ist die zweite Dicke (D2) mindestens um den Faktor (F) 1,5, bevorzugt sogar um mindestens den Faktor 2, größer als die erste Dicke (D1) des Mantelrohres (D2 > F*D1). Weiterhin ist bevorzugt, dass die zweite Dicke einen Wert von 1,5 mm nicht überschreitet. Damit ist es möglich, das Mantelrohr gerade nur so dick auszuführen, dass es der Abgasbehandlungskomponente die äußere Form gibt, während die tragende Funktion der gesamten Abgasbehandlungskomponente überwiegend über die verstärkende Hülse realisiert ist.

Weiter wird auch vorgeschlagen, dass das Mantelrohr und die mindestens eine Hülse unterschiedliche thermische Ausdehnungskoeffizienten aufweisen. Damit ist gemeint, dass sich Mantelrohr und Hülse bei thermischen Beanspruchungen unterschiedlich stark ausdehnen bzw. bei einer Abkühlung wieder unterschiedlich stark schrumpfen. Bevorzugt ist dabei die Ausgestaltung, bei der die Hülse einen kleineren Ausdehnungskoeffizienten als das Mantelrohr aufweist. Damit ist sichergestellt, dass sich die Hülse auch bei thermischen Wechselbeanspruchungen langsamer ausdehnt, als das innenliegende Mantelrohr und somit ein Kontakt hin zum Mantelrohr stets gewährleistet ist. Solche unterschiedlichen Ausdehnungskoeffizienten können beispielsweise durch verschiedene Materialien realisiert werden. Dabei sind bevorzugt metallische Materialien zu verwenden, beispielsweise austenitische bzw. ferritische Stähle.

Gemäß einer Weiterbildung des Gehäuses ist die mindestens eine Hülse an einem Ende des Mantelrohres angeordnet. Dies ist insbesondere dann vorteilhaft, wenn nur eine einseitige Fixierung der Abgasbehandlungskomponente bzw. des Gehäuses mit weiteren Komponenten eines Abgassystems gewünscht ist. Dann kann die Materialverstärkung im Bereich des Endes des Mantelrohres zur Fixierung an einer Abgasleitung genutzt werden. Gerade für eine solche Anordnung sind besonders kurze Hülsen einsetzbar. Es ist jedoch klar, dass auch an beiden Enden des Mantelrohres solche Hülsen vorgesehen werden können, wenn eine ähnliche Fixierung am anderen Ende des Mantelrohres stattfinden soll.

Weiter wird vorgeschlagen, dass das Mantelrohr und die mindestens eine Hülse wenigstens eine Verstärkungsstruktur aufweisen. Solche Verstärkungsstrukturen sind beispielsweise als Materialanhäufung, als Sicke, als Wulst oder dergleichen ausgebildet. Bevorzugt weisen sowohl das Mantelrohr als auch die Hülse mindestens eine Verstärkungsstruktur auf, wobei sich diese gegebenenfalls überlagern. Ganz besonders bevorzugt ist die Ausgestaltung, bei der die mindestens eine Verstärkungsstruktur der Hülse und die mindestens eine Verstärkungsstruktur des Mantelrohres ineinander greifen. Dabei ist besonders bevorzugt, dass die Verstärkungsstruktur in Umfangsrichtung umlaufend als eine Art Wulst bzw. Sicke ausgebildet sind. Die Form der Wulst bzw. Sicke im Querschnitt kann nach den jeweiligen Gegebenheiten ausgewählt werden, wobei beispielsweise auch halbkreisähnliche, omega-förmige oder ähnliche Ausgestaltungen einer Verstärkungsstruktur verwirklicht sein können. Für den Fall, dass es sich hierbei um eine umlaufende Verstärkungsstruktur handelt, die einen im wesentlichen halbkreisförmigen Querschnitt aufweist, erstreckt sich diese über bevorzugt weniger als 10 mm (Millimeter) der zweiten Länge der Hülse. Gemäß einer besonders bevorzugten Ausführungsvariante sind die Verstärkungsstrukturen des Mantelrohres und der Hülse ineinander greifend ausgebildet, insbesondere formschlüssig.

Einer Weiterbildung des Gehäuses zufolge hat die mindestens eine Hülse zumindest eine Begrenzung mit einem wenigstens abschnittsweise nicht in Umfangsrichtung verlaufenden Rand. Wie bereits erwähnt ist eine solche Hülse in Umfangsrichtung umlaufend ausgebildet, so dass die Hülse in axialer Richtung jeweils eine Begrenzung aufweist. Hier wird nun vorgeschlagen, dass zumindest einer dieser Begrenzungen nicht parallel zu den Enden des Mantelrohres sondern wenigstens abschnittsweise nicht in Umfangsrichtung bzw. parallel dazu verläuft. Der Rand ist damit länger als die Begrenzung in Umfangsrichtung. Damit ist ein Mittel angegeben, um beispielsweise die Biegebelastung auf das Mantelrohr bei einseitiger Fixierung des Gehäuses zu reduzieren. Der Rand bietet so keine in Umfangsrichtung verlaufende Sollbruchstelle, sondern hat aufgrund des breit gefächerten Verlaufes über die Außenfläche des Mantelrohres eine geringere Biegebelastung zur Folge.

Weiter wird, unter anderem mit dem Ziel einer reduzierten Biegebelastung, auch vorgeschlagen, dass die mindestens eine Hülse zumindest eine Begrenzung mit einer gegenüber der zweiten Dicke reduzierten Dicke ausgeführt ist. Damit ist gemeint, dass die mindestens eine Hülse nicht nur eine konstante zweite Dicke über ihre gesamte zweite Länge aufweist, sondern dass im Bereich der Begrenzung eine reduzierte Dicke vorliegt. Die Dickenreduzierung erfolgt dabei bevorzugt kontinuierlich, also in einem Verlauf von der zweiten Dicke hin bis zu einem Minimalwert am Rand, beispielsweise von 0,5 bzw. 0,3 mm. Auch diese Maßnahme reduziert die von außen auf das Mantelrohr infolge einer Biegung einwirkenden Kräfte lokal und das resultierende Gewicht des Gehäuses.

Außerdem sind das Mantelrohr und die mindestens eine Hülse miteinander wenigstens teilweise hartgelötet ("brazed"). Grundsätzlich sei an dieser Stelle darauf hingewiesen, dass die mindestens eine Hülse durch Aufschrumpfen, Rollieren, Pressen oder einer ähnlichen Weise auf das Mantelrohr aufgebracht sein kann. Beider Ausbildung einer bevorzugten fügetechnischen Verbindung sind diese Komponenten miteinander hartgelötet. Dabei können die Verbindungsbereiche in Umfangsrichtung und in Längenrichtung jeweils unterbrochen oder fortlaufend ausgebildet sein.

Auch weist die mindestens eine Hülse wenigstens ein Reservoir zur Aufnahme von Hartlot auf. Das mindestens eine Reservoir ist regelmäßig so gebildet, dass ein vom Mantelrohr beabstandeter Abschnitt der Hülse gebildet ist, so dass z.B. ein Hohlraum zwischen diesen Komponenten geformt ist. Dort kann (z.B. pulverförmiges) Hartlot platziert werden, das bei einer späteren thermischen Behandlung des Gehäuses einerseits die Verbindung von Mantelrohr und Hülse verstärkt und andererseits gewährleistet, dass die Verbindung miteinander gasdicht ausgeführt ist. Deshalb ist auch bevorzugt, dass wenigstens ein Reservoir über den Umfang der Hülse bzw. des Mantelrohres umlaufend ausgebildet ist.

Gemäß einer weiteren Ausgestaltung des Gehäuses sind das Mantelrohr und die mindestens eine Hülse miteinander wenigstens teilweise verschweißt. Grundsätzlich sei an dieser Stelle darauf hingewiesen, dass die mindestens eine Hülse durch Aufschrumpfen, Rollieren, Pressen oder einer ähnlichen Weise auf das Mantelrohr aufgebracht sein kann. Zur Ausbildung einer weiteren fügetechnischen Verbindung können diese Komponenten miteinander geschweißt (insbesondere lasergeschweißt) sein. Dabei können die Verbindungsbereiche in Umfangsrichtung und in Längenrichtung jeweils unterbrochen oder fortlaufend ausgebildet sein.

Dabei ist vorteilhaft, dass die mindestens eine Hülse wenigstens einen Kontaktbereich zur Ausbildung einer Schweißverbindung aufweist. Besonders bevorzugt ist die Ausgestaltung, dass die Hülse zumindest einen Kontaktbereich und ein Reservoir bildet. Der Kontaktbereich (zwischen Mantelrohr und Hülse) dient zur Ausbildung von beispielsweise einer über den Umfang nicht geschlossenen Schweißnaht, so dass kostengünstig und schnell mit wenigen Schweißpunkten eine Fixierung der Hülse an dem Mantelrohr erfolgen kann. Dieser Kontaktbereich kann über den Umfang der Hülse ausgebildet sein, es ist aber auch möglich, nur stellenweise, nicht miteinander verbundene Kontaktbereiche auszubilden, z.B. an den Stellen eines gewünschten Schweißpunktes. Bei einer Ausgestaltung des Kontaktbereiches als sich hin zum Mantelrohr erstreckende Vertiefung kann z.B. die Position des zu setzenden Schweißpunktes automatisch erkannt werden.

Gemäß einem weiteren Aspekt der Erfindung wird eine Abgasbehandlungskomponente vorgeschlagen, die zumindest eine Wabenstruktur mit einer Vielzahl von für ein Fluid durchströmbaren Kanälen umfasst, und die in mindestens einem Gehäuse angeordnet ist, wobei das mindestens eine Gehäuse nach der vorstehend beschriebenen, erfindungsgemäßen, Art ausgebildet ist. Eine solche Wabenstruktur ist bevorzugt mit zumindest teilweise strukturierten, hochtemperaturfesten Metallfolien gebildet. Mit Kanälen, sind insbesondere längliche Hohlräume gemeint, die sich zumindest über einen Teil der axialen Länge der Wabenstruktur erstrecken. Dabei ist auch möglich, dass die Kanäle zumindest teilweise verschlossen sind, wobei kommunizierende Kanäle dann ausgebildet sind, in denen das Abgas von einem Kanal hin zu einem benachbarten strömen kann. Als Abgasbehandlungskomponente kommen katalytische Konverter, Filter, Partikelabscheider, Adsorber, Mischer oder ähnliche Reaktoren in Betracht.

Weiter wird auch ein Abgassystem vorgeschlagen, das eine Abgasleitung und mindestens eine Abgasbehandlungskomponente (wie zuvor beschrieben) umfasst, wobei die Abgasleitung mit dem mindestens einen Gehäuse verschweißt ist. Dazu wird bevorzugt ein Bereich ausgewählt, in dem die Hülse vorgesehen ist. Ganz besonders bevorzugt ist dabei die Ausgestaltung, bei der eine Schweißnaht durch die Abgasleitung, die Hülse und das Mantelrohr hindurch ausgebildet ist. Dies findet beispielsweise im Bereich einer Verstärkungsstruktur statt.

Schließlich wird hier auch ein Kraftfahrzeug umfassend wenigstens eine solche Abgasbehandlungskomponente oder ein solches Abgassystem vorgeschlagen. Mit Kraftfahrzeug sind dabei insbesondere alle flurgebundenen Fahrzeuge (PKW, LKW, Motorrad, etc.) gemeint. Eine weitere Anwendung finden solche Abgasbehandlungskomponenten in Handgeräten (Rasenmäher, Kettensägen, etc.).

Die Erfindung sowie das technische Umfeld werden anhand der Figuren nachfolgend näher erläutert. Es sei darauf hingewiesen, dass besonders bevorzugte Ausgestaltungen gezeigt sind, die Erfindung jedoch nicht auf diese begrenzt ist. Es zeigen schematisch:
- Fig. 1:: einen Teilquerschnitt einer ersten Ausführungsvariante eines Gehäuses;
- Fig. 2:: eine zweigeteilte Darstellung einer zweiten Ausführungsvariante einer Abgasbehandlungskomponente;
- Fig. 3:: schematisch ein Kraftfahrzeug mit einem Abgassystem;
- Fig. 4:: eine dritte Ausführungsvariante des Gehäuses;
- Fig. 5:: eine vierte Ausführungsvariante des Gehäuses; und
- Fig. 6:: eine fünfte Ausführungsvariante des Gehäuses.

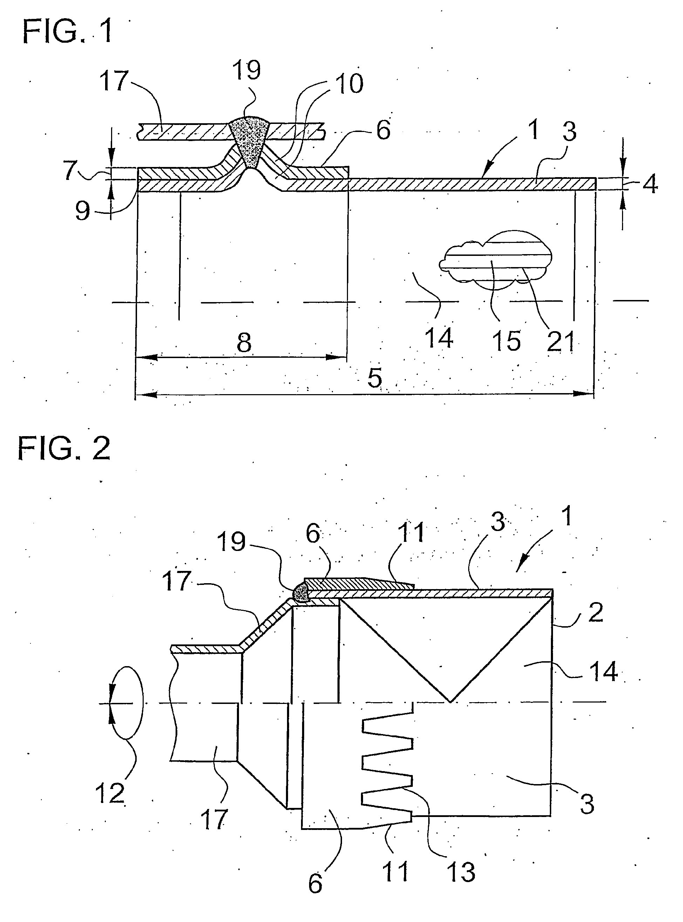

Fig. 1 zeigt schematisch in einem Halbschnitt eine bevorzugte Ausführungsvariante eines Gehäuses 1 für eine Abgasbehandlungskomponente 2. Das Gehäuse 1 umfasst ein Mantelrohr 3 mit einer ersten Dicke 4 und einer ersten Länge 5 sowie eine Hülse 6 mit einer zweiten Dicke 7 und einer zweiten Länge 8. Die Hülse 6 liegt außen an dem Mantelrohr 3 an und ist mit diesem verbunden (beispielsweise durch einen Hochtemperatur-Vakuum-Lötprozess). Dabei ist die zweite Länge 8 der Hülse 6 kürzer ausgebildet als die erste Länge 5 des Mantelrohres 3. Bei der dargestellten Ausführungsvariante ist die Hülse 6 bündig zu einem Ende 9 des Mantelrohres 3 angeordnet. Sowohl das Mantelrohr 3 als auch die Hülse 6 weisen jeweils eine Verstärkungsstruktur 10 auf, die in Umfangsrichtung 12 umlaufend ausgebildet ist. Diese Verstärkungsstruktur 10 dienst schließlich zur Fixierung der Abgasbehandlungskomponente 2 beziehungsweise des Gehäuses 1 an einer angedeuteten Abgasleitung 17 mittels einer Schweißnaht 19, die sich durch die Abgasleitung 17, die Hülse 6 und das Mantelrohr 3 hinein bzw. hindurch erstreckt. Die Abgasbehandlungskomponente 2 weist eine Wabenstruktur 14 auf, die eine Vielzahl von für ein Fluid durchströmbaren Kanäle 15 umfasst. Die Kanäle 15 werden durch zumindest teilweise strukturierte Metallfolien 21 gebildet.

Fig. 2 zeigt schematisch eine weitere Ausführungsvariante einer Abgasbehandlungskomponente 2, die an einer Abgasleitung 17 mittels einer Schweißnaht 19 fixiert ist. Die Darstellung zeigt oben einen Längsschnitt und unterhalb der Mittellinie eine Draufsicht auf die Abgasbehandlungskomponente 2. Aus dem Längsschnitt ist zu erkennen, dass die Hülse 6 wieder außen an dem Mantelrohr 3 befestigt wurde, wobei die Hülse 6 eine Begrenzung 11 mit einer gegenüber der zweiten Dicke 7 reduzierten Dicke aufweist. Diese Begrenzung 11 ist in einem Bereich des Mantelrohres 3 angeordnet, der von den Enden 9 entfernt ist. Die gezeigte einseitige Fixierung des Gehäuses 1 an der Abgasleitung 17, die hier in innere Bereiche des Gehäuses 1 eingeschoben wird, erfolgte mittels einer in Umfangsrichtung 12 umlaufenden Schweißnaht 17, die entlang dem Ende 9 des Mantelrohres beziehungsweise der Begrenzung 11 der Hülse 6, die nicht hinsichtlich ihrer Dicke reduziert ist, verläuft. Zur Reduzierung der Biegebelastung auf das Mantelrohr 3 ist die Hülse 6 mit einer Begrenzung 11 ausgestattet, die einen wenigstens abschnittsweise nicht in Umfangsrichtung 12 verlaufenden Rand 13 hat. Wie bei einem Vergleich von Längsschnitt und Draufsicht zu erkennen ist, erschreckt sich der Verlauf des Randes 13 über den Bereich der Begrenzung 11 mit einem reduzierten Dickenmaß.

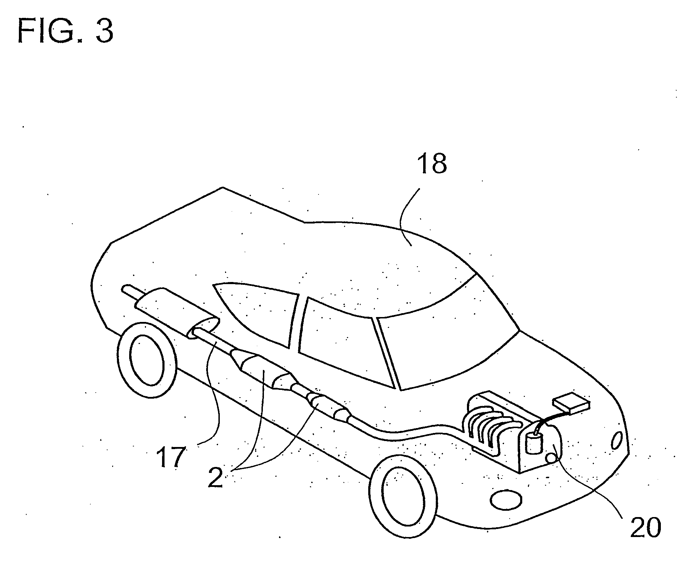

Fig. 3 zeigt schließlich ein Kraftfahrzeug 18, dass mehrere Abgasbehandlungskomponenten 2 aufweist, die im Inneren einer Abgasleitung 17 angeordnet sind. Die Abgasbehandlungskomponenten 2 dienen beispielsweise zur Umwandlung von im Abgas enthaltenen Schadstoffen beziehungsweise zum zumindest zeitweisen Zurückhalten dieser Schadstoffe und/oder Feststoffe, die in der Verbrennungskraftmaschine 20 des Fahrzeugs 18 gebildet werden. Nach einer Reinigung des Abgases werden diese an die Umgebung abgegeben. Die hier vorgeschlagenen Abgasbehandlungskomponenten 2 mit dem erfindungsgemäßen Gehäuse 1 werden insbesondere dort eingesetzt, wo das Gewicht der Komponenten beachtlich ist.

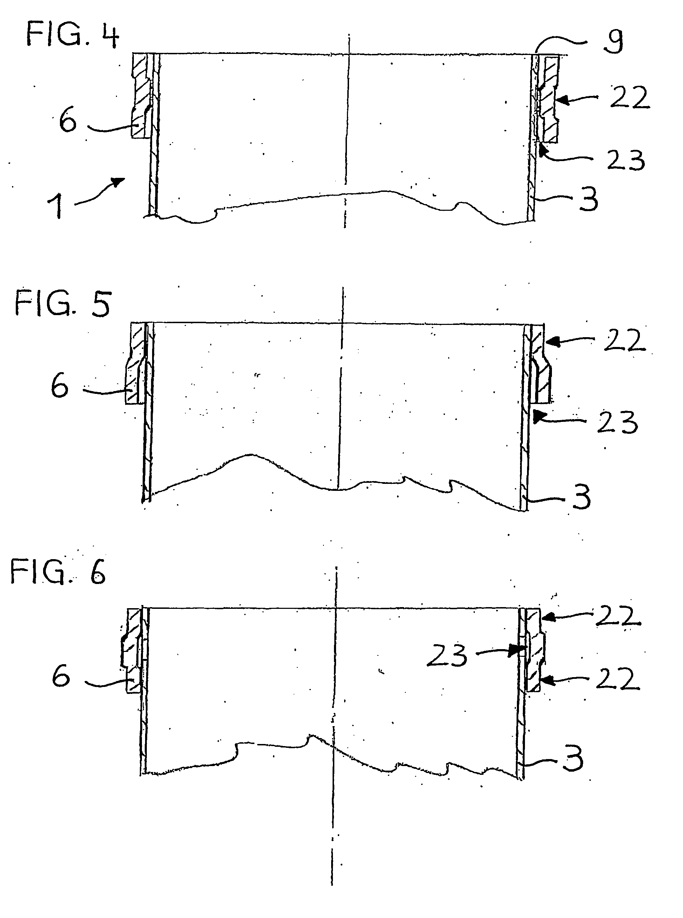

Die Fig. 4, 5 und 6 veranschaulichen weitere Ausführungsvarianten des Gehäuses 1, wobei die dargestellten, bündig zu einem Ende 9 des Mantelrohres 3 angeordneten Hülsen 6 wenigstens einen Kontaktbereich 22 zur Ausbildung einer Schweißverbindung und wenigstens ein Reservoir 23 zur Aufnahme von Hartlot aufweisen. Die Hülse 6 aus Fig. 4 hat einen symmetrischen Aufbau, wobei zentrisch ein Kontaktbereich 22 und benachbart jeweils ein Reservoir 23 ausgebildet ist. Bei dieser Ausgestaltung sind die Reservoire 23 auch nach der Montage noch erreichbar, so dass das Hartlot auch dann noch appliziert werden kann. Eine im Wesentlichen inverse Anordnung ist in Fig. 6 gezeigt, wobei das Hartlot vorteilhafter Weise vor der Montage im Bereich des Reservoirs 23 appliziert wird. Ein weiterer, zweiteiliger, Aufbau der Hülse 6 geht aus Fig. 5 hervor. Auch wenn hier in Bezug auf den Aufbau der Hülse 6 nur bevorzugte Ausführungsbeispiele gezeigt sind, können doch unter Berücksichtigung der Verbindungsart zwischen Mantelrohr 3 und Hülse 6 weitere nahe liegende Abwandlungen zweckmäßig sein.

### Bezugszeichenliste

- 1: Gehäuse
- 2: Abgasbehandlungskomponente
- 3: Mantelrohr
- 4: erste Dicke
- 5: erste Länge
- 6: Hülse
- 7: zweite Dicke
- 8: zweite Länge
- 9: Ende
- 10: Verstärkungsstruktur
- 11: Begrenzung
- 12: Umfangsrichtung
- 13: Rand
- 14: Wabenstruktur
- 15: Kanal
- 16: Abgassystem
- 17: Abgasleitung
- 18: Kraftfahrzeug
- 19: Schweißnaht
- 20: Verbrennungskraftmaschine
- 21: Metallfolie
- 22: Kontaktbereich
- 23: Reservoir

## Patentansprüche

1. Gehäuse (1) für eine Abgasbehandlungskomponente (2) umfassend ein Mantelrohr (3) mit einer ersten Dicke (4) und einer ersten Länge (5) sowie mindestens eine Hülse (6) mit einer zweiten Dicke (7) und einer zweiten Länge (8), wobei die mindestens eine Hülse (6) zumindest teilweise außen an dem Mantelrohr (3) anliegt und mit diesem verbunden ist, wobei die mindestens eine Hülse (6) mit einer zweiten Länge (8) ausgebildet ist, die kürzer als die erste Länge (5) des Mantelrohres (3) ist, **dadurch gekennzeichnet, dass** das Mantelrohr (3) und die mindestens eine Hülse (6) miteinander wenigstens teilweise hartgelötet sind und die mindestens eine Hülse (6) zumindest einen Kontaktbereich und wenigstens ein Reservoir (23) zur Aufnahme von Hartlot aufweist.

2. Gehäuse (1) nach Anspruch 1, **dadurch gekennzeichnet, dass** die zweite Länge (8) der mindestens einen Hülse (3) in einem Bereich von 10 mm bis 40 mm liegt.

3. Gehäuse (1) nach Anspruch 1 oder 2, **dadurch gekennzeichnet, dass** die erste Dicke (4) des Mantelrohres (3) kleiner ist als die zweite Dicke (7) der mindestens einen Hülse (6).

4. Gehäuse (1) nach einem der vorhergehenden Ansprüche, **dadurch gekennzeichnet, dass** das Mantelrohr (3) und die mindestens eine Hülse (6) unterschiedliche thermische Ausdehnungskoeffizienten aufweisen.

5. Gehäuse (1) nach einem der vorhergehenden Ansprüche, **dadurch gekennzeichnet, dass** die mindestens eine Hülse (6) an einem Ende (9) des Mantelrohres (3) angeordnet ist.

6. Gehäuse (1) nach einem der vorhergehenden Ansprüche, **dadurch gekennzeichnet, dass** das Mantelrohr (3) und die mindestens eine Hülse (6) wenigstens eine Verstärkungsstruktur (10) aufweisen.

7. Gehäuse (1) nach einem der vorhergehenden Ansprüche, **dadurch gekennzeichnet, dass** die mindestens eine Hülse (6) zumindest eine Begrenzung (11) mit einem wenigstens abschnittsweise nicht in Umfangsrichtung (12) verlaufenden Rand (13) hat.

8. Gehäuse (1) nach einem der vorhergehenden Ansprüche, **dadurch gekennzeichnet, dass** die mindestens eine Hülse (6) zumindest eine Begrenzung (11) mit einer gegenüber der zweiten Dicke (7) reduzierten Dicke ausgeführt ist.

9. Gehäuse (1) nach einem der vorhergehenden Ansprüche, **dadurch gekennzeichnet, dass** das Mantelrohr (3) und die mindestens eine Hülse (6) miteinander wenigstens teilweise verschweißt sind.

10. Gehäuse (1) nach Anspruch 9, **dadurch gekennzeichnet, dass** die mindestens eine Hülse (6) wenigstens einen Kontaktbereich (22) zur Ausbildung einer Schweißverbindung aufweist.

11. Abgasbehandlungskomponente (2) umfassend zumindest eine Wabenstruktur (14) mit einer Vielzahl von für ein Fluid durchströmbaren Kanälen (15), die in mindestens einem Gehäuse (1) angeordnet ist, **dadurch gekennzeichnet, dass** das mindestens eine Gehäuse (1) nach einem der vorhergehenden Ansprüche ausgebildet ist.

12. Abgassystem (16) umfassend eine Abgasleitung (17) und wenigstens eine Abgasbehandlungskomponente (2) nach Anspruch 11, **dadurch gekennzeichnet, dass** die Abgasleitung (17) mit dem mindestens einen Gehäuse (1) verschweißt ist.

13. Kraftfahrzeug (18) umfassend wenigstens eine Abgasbehandlungskomponente (2) nach Anspruch 11 oder ein Abgassystem (16) nach Anspruch 12.

## Claims

1. A housing (1) for an exhaust gas treatment component (2) comprising a casing tube (3) with a first thickness (4) and a first length (5), as well as at least one sleeve (6) with a second thickness (7) and a second length (8), wherein the at least one sleeve (6) bears at least partially on the outside of the casing tube (3) and is connected to it, wherein the at least one sleeve (6) is constructed with a second length (8), which is shorter than the first length (5) of the casing tube (3), **characterized in that**, the casing tube (3) and the at least one sleeve (6) are at least partially hard soldered with each other and the at least one sleeve (6) has at least one contact region and at least one reservoir (23) for receiving hard solder.

2. Housing (1) according to claim 1, **characterized in that** the second length (8) of the at least one sleeve (3) is in a range of 10 mm to 40 mm.

3. Housing (1) according to claim 1 or 2, **characterized in that** the first thickness (4) of the casing tube (3) is smaller than the second thickness (7) of the at least one sleeve (6).

4. Housing (1) according to one of the preceding claims, **characterized in that** the casing tube (3) and the at least one sleeve (6) have different thermal coefficients of expansion.

5. Housing (1) according to one of the preceding claims, **characterized in that** the at least one sleeve (6) is arranged at one end (9) of the casing tube (3).

6. Housing (1) according to one of the preceding claims, **characterized in that** the casing tube (3) and the at least one sleeve (6) have at least one reinforcing structure (10).

7. Housing (1) according to one of the preceding claims, **characterized in that** the at least one sleeve (6) has at least one boundary (11) with an edge (13) which at least in certain sections does not extend in the circumferential direction (12).

8. Housing (1) according to one of the preceding claims, **characterized in that** the at least one sleeve (6) is configured as a boundary (11) with a thickness, which is reduced compared to the second thickness (7).

9. Housing (1) according to one of the preceding claims, **characterized in that** the casing tube (3) and the at least one sleeve (6) are at least partially welded to one another.

10. Housing (1) according to claim 9, **characterized in that** the at least one sleeve (6) has at least one contact region (22) for forming a welded connection.

11. Exhaust gas treatment component (2), comprising at least one honeycomb structure (14) with a multiplicity of channels (15), through which a fluid can flow and which are arranged in at least one housing (1), **characterized in that** the at least one housing (1) is configured according to one of the preceding claims.

12. Exhaust gas system (16), comprising an exhaust gas line (17) and at least one exhaust gas treatment component (2) according to claim 11, **characterized in that** the exhaust gas line (17) is welded to the at least one housing (1).

13. Motor vehicle (18), comprising at least one exhaust gas treatment component (2) as claimed in claim 11 or an exhaust gas system (16) according to claim 12.

## Revendications

1. Boîtier (1) pour un composant de traitement de gaz d'échappement (2), comprenant un tube d'enveloppe (3) avec une première épaisseur (4) et une première longueur (5) ainsi qu'au moins une douille (6) d'une deuxième épaisseur (7) et d'une deuxième longueur (8), l'au moins une douille (6) s'appliquant au moins partiellement à l'extérieur contre le tube d'enveloppe (3) et étant reliée à celui-ci, l'au moins une douille (6) étant réalisée avec une deuxième longueur (8), qui est plus courte que la première longueur (5) du tube d'enveloppe (3), **caractérisé en ce que** le tube d'enveloppe (3) et l'au moins une douille (6) sont brasés au moins partiellement entre eux et l'au moins une douille (6) a au moins une région de contact et au moins un réservoir (23) pour loger du métal d'apport de brasage fort.

2. Boîtier (1) selon la revendication 1, **caractérisé en ce que** la deuxième longueur (8) de l'au moins une douille (3) se trouve dans une région de 10 mm à 40 mm.

3. Boîtier (1) selon la revendication 1 ou 2, **caractérisé en ce que** la première épaisseur (4) du tube d'enveloppe (3) est plus petite que la deuxième épaisseur (7) de l'au moins une douille (6).

4. Boîtier (1) selon l'une des revendications précédentes, **caractérisé en ce que** le tube d'enveloppe (3) et l'au moins une douille (6) ont des coefficients de dilatation thermiques différents.

5. Boîtier (1) selon l'une des revendications précédentes, **caractérisé en ce que** l'au moins une douille (6) est agencée sur une extrémité (9) du tube d'enveloppe (3).

6. Boîtier (1) selon l'une des revendications précédentes, **caractérisé en ce que** le tube d'enveloppe (3) et l'au moins une douille (6) présentent au moins une structure de renforcement (10).

7. Boîtier (1) selon l'une des revendications précédentes, **caractérisé en ce que** l'au moins une douille (6) a au moins une limitation (11) avec un bord (13) ne s'étendant au moins pas par tronçons en direction circonférentielle (12).

8. Boîtier (1) selon l'une des revendications précédentes, **caractérisé en ce que** l'au moins une douille (6) est réalisée avec au moins une limitation (11) avec une épaisseur réduite par rapport à la deuxième épaisseur (7).

9. Boîtier (1) selon l'une des revendications précédentes, **caractérisé en ce que** le tube d'enveloppe (3) et l'au moins une douille (6) sont soudés au moins partiellement l'un à l'autre.

10. Boîtier (1) selon la revendication 9, **caractérisé en ce que** l'au moins une douille (6) a au moins une région de contact (22) pour la génération d'une liaison soudée.

11. Composant de traitement de gaz d'échappement (2), comprenant au moins une structure en nids d'abeilles (14) avec une multiplicité de canaux (15) à travers lesquels un fluide peut s'écouler, lequel composant est agencé dans au moins un boîtier (1), **caractérisé en ce que** l'au moins un boîtier (1) est réalisé selon l'une des revendications précédentes.

12. Système de gaz d'échappement (16) comprenant une conduite de gaz d'échappement (17) et au moins un composant de traitement de gaz d'échappement (2) selon la revendication 11, **caractérisé en ce que** la conduite de gaz d'échappement (17) est soudée à l'au moins un boîtier (1).

13. Véhicule automobile (18), comprenant au moins un composant de traitement de gaz d'échappement (2) selon la revendication 11 ou un système de gaz d'échappement (16) selon la revendication 12.
